# EUROPÄISCHE PATENTSCHRIFT

(11) **EP 1 543 247 B1**
(45) Veröffentlichungstag und Bekanntmachung des Hinweises auf die Patenterteilung: **11.06.2008**
(21) Anmeldenummer: 03748028.2
(22) Anmeldetag: 15.09.2003
(51) Int. Cl.: F16B 7/10, F16B 7/14, F16M 11/26, F16M 11/32

(54) **MEHRFACH-TELESKOPROHR MIT LASTABHÄNGIGER ARRETIERUNG**
MULTIPLE TELESCOPIC TUBE COMPRISING A LOAD-CONTROLLED LOCKING DEVICE
TUBE TELESCOPIQUE MULTIPLE COMPRENANT UN DISPOSITIF D'ARRET DEPENDANT DE LA CHARGE

(30) Priorität: 26.09.2002 DE 10244994
(43) Veröffentlichungstag der Anmeldung: 22.06.2005
(73) Patentinhaber: Camera Dynamics GmbH, 85386 Eching (DE)
(72) Erfinder: HEIN, Dieter, 86949 Windach (DE)
(74) Vertreter: HOFFMANN EITLE
(86) Internationale Anmeldenummer: PCT/EP2003/010243
(87) Internationale Veröffentlichungsnummer: WO 2004/031596

(56) Entgegenhaltungen:
- WO-A-93/12372
- DE-C- 846 040
- US-A- 5 826 847
- US-A- 5 887 835

## Beschreibung

### Technisches Gebiet

Die vorliegende Erfindung betrifft ein Mehrfach-Teleskoprohr. Der Begriff "Mehrfach" bedeutet, dass zumindest zwei parallel zueinander angeordnete Außenrohre und zumindest zwei parallel zu den Außenrohren angeordnete Innenrohre vorgesehen sind, die bezüglich der Außenrohre in Längsrichtung verschiebbar sind, und zwar stufenlos verschiebbar. Der Begriff bedeutet aber auch, dass in Teleskoprichtung mindestens zwei Rohre vorgesehen und ineinander verschiebbar sind. Eine Klemmeinrichtung dient dazu, die Innenrohre bezüglich der Außenrohre in jeder beliebigen Relativstellung arretieren zu können.

Solche Mehrfach-Teleskoprohre sind insbesondere als Stativbeine von Kamerastativen verwendbar. Beispielsweise sind im Fall eines Dreibein-Kamerastativs drei solcher Mehrfach-Teleskoprohre vorgesehen und bilden jeweils ein Stativbein.

Der Begriff "Teleskoprohr" bedeutet im Folgenden, dass die Innenrohre parallel zu den Außenrohren verschiebbar sind, um das Mehrfach-Teleskoprohr - insbesondere das Stativbein - zu verlängern oder zu verkürzen. Die Innenrohre sind dabei jedoch nicht unbedingt in den Außenrohren gleitbar angeordnet, sondern können auch neben diesen vorgesehen sein.

### Stand der Technik

Ein Mehrfach-Teleskoprohr gemäß dem Oberbegriff des Patentanspruchs 1 ist aus der WO 93/12372 A bekannt. Es handelt sich um ein Kamerastativ mit drei Doppel-Teleskoprohren, die jeweils ein Stativbein bilden. Dabei können die Innenrohre in oder neben den Außenrohren verschiebbar angeordnet sein. Die Arretierung der Innenrohre bezüglich der Außenrohre erfolgt jeweils mittels einer Klemmeinrichtung, die beispielsweise über eine Griffschraube oder einen Klemmhebel betätigbar ist. Die Klemmeinrichtung muss gelöst werden, um das Stativbein auseinanderziehen oder zusammenschieben zu können, und nach dem Auseinanderziehen oder Zusammenschieben wieder festgezogen werden.

Bei diesem herkömmlichen Stativ weist jedes Stativbein zwei Teleskopeinheiten oder Auszüge auf, d.h. es sind insgesamt sechs Klemmeinrichtungen vorhanden. Sollen beispielsweise alle drei Stativbeine aus dem zusammengeschobenen Zustand vollständig auseinandergezogen werden, müssen daher sechs Schrauben gelöst und wieder festgezogen werden. Dies ist insbesondere bei schnellen und häufigen Motivwechseln mühsam.

In DE 846 040 C ist eine Verriegelungsvorrichtung für Rohre von teleskopartigen Konstruktionen beschrieben, wie sie sich beispielsweise in mechanischen Zangen finden. Die teleskopartige Konstruktion besteht hier lediglich aus einem einzelnen Außenrohr und einem darin gleitbar angeordneten Innenrohr, es handelt sich also um ein Einfach-Teleskoprohr. Zur Arretierung des Innenrohrs bezüglich des Außenrohrs ist im Inneren der beiden Rohre eine Klemmeinrichtung in Form einer Keilkonstruktion vorgesehen, so dass die Klemmung innerhalb des Teleskoprohrs bewirkt wird. Wirkt nun eine Druckbelastung auf das Teleskoprohr, so verhindert die Klemmeinrichtung das Zusammenschieben des Teleskoprohrs, während das Teleskoprohr jedoch jederzeit weiter auseinanderziehbar bleibt. Je größer die Druckbelastung wird, desto stärker wird auch die Klemmkraft. Bei umgekehrter Anordnung der Keilkonstruktion kann ein Auseinanderziehen des Teleskoprohrs verhindert werden, während das Teleskoprohr jederzeit weiter zusammenschiebbar ist. Eine Freigabe-Einrichtung ist ebenfalls vorgesehen, um die Arretierung auf Wunsch wieder zu lösen.

### Darstellung der Erfindung

Der Erfindung **liegt die Aufgabe zugrunde**, ein Mehrfach-Teleskoprohr zu schaffen, das bei optimalem und einfachem Feststellen der Relativstellung der Teleskoprohre mit möglichst wenig Aufwand auseinanderziehbar und zusammenschiebbar ist, wobei gleichzeitig der konstruktionelle Aufwand möglichst gering bleiben soll. Zugleich sollte eine möglichst hohe Klemmkraft erzielt werden können.

Diese **Aufgabe** wird gemäß der Erfindung in Verbindung mit den Merkmalen des Patentanspruchs 1 dadurch **gelöst,** dass das Mehrfach-Teleskoprohr mit einer Klemmeinrichtung versehen ist, das ein Klemmeingriffselement aufweist. Dieses Eingriffselement ist mit den Außenflächen der Innenrohre in Eingriff bringbar. Die Klemmeinrichtung verhindert bei Belastung des Mehrfach-Teleskoprohrs in einer eine Klemmung auslösenden Klemmlängsrichtung das Verschieben der Innenrohre bezüglich der Außenrohre in dieser Klemmlängsrichtung, während die Verschiebbarkeit in der entgegengesetzten Längsrichtung erhalten bleibt. Die Klemmeinrichtung weist außerdem ein eine Betätigung des Klemmeingriffselements auslösendes Eingriffsbetätigungselement auf, das mit den Außenrohren fest verbunden und relativ zum Klemmeingriffselement beweglich ist. Der Ausdruck Eingriffsbetätigungselement schließt ein, dass die Betätigung dadurch erfolgt, dass das Klemmeingriffselement relativ zum Eingriffsbetätigungselement bewegt wird, um Klemmeingriffsbetätigung zu bewirken. Bei Belastung des Mehrfach-Teleskoprohrs in der Klemmlängsrichtung, d.h. Druck- bzw. Zugbelastung, gerät das Eingriffsbetätigungselement dann mit dem Klemmeingriffselement in Eingriff und bewirkt die Arretierung.

Die Belastung in der Klemmlängsrichtung des Mehrfach-Teleskoprohrs kann dabei entweder eine Druckbelastung des Teleskoprohrs und/oder eine Zugbelastung des Teleskoprohrs sein.

Im ersten Fall kann das Mehrfach-Teleskoprohr mit der erfindungsgemäßen Klemmeinrichtung daher stets auseinandergezogen werden, ohne dass eine irgendwie geartete Einrichtung betätigt, insbesondere ohne dass eine Schraube oder ein Klemmhebel gelöst werden müsste. Die Arretierung des Mehrfach-Teleskoprohrs in der gewünschten Länge erfolgt dann einfach dadurch, dass eine Druckbelastung auf das Mehrfach-Teleskoprohr ausgeübt wird. Im Falle der Verwendung des Mehrfach-Teleskoprohrs als Kamerastativbein kann diese Druckbelastung beispielsweise durch das Gewicht einer Kamera verursacht werden, die sich auf dem Stativ befindet.

Zur Arretierung gerät das Klemmeingriffselement der Klemmeinrichtung in Eingriff mit den Außenflächen der Innenrohre. Da dieser Eingriff von außerhalb der Rohre erfolgt, das Eingriffselement also zwischen den Innenrohren angeordnet ist, reicht eine einzige Klemmeinrichtung aus, um die Arretierung an allen vorhandenen Rohren des Mehrfach-Teleskoprohrs vorzunehmen. Dies bedeutet einen relativ geringen konstruktionellen Aufwand.

Je größer nun die Druckbelastung wird, die das Mehrfach-Teleskoprohr zusammenschieben möchte, desto größer wird die Klemmkraft, da sich der Eingriff zwischen dem Klemmeingriffselement und den Außenflächen der Innenrohre mit zunehmender Druckbelastung weiter verstärkt.

Im Gegensatz zu bekannten Teleskoprohren, bei denen an jeder Teleskopeinheit eine Schraube gelöst werden muss, um die Stativbeine ausziehen zu können, gestaltet sich das Auseinanderziehen des erfindungsgemäßen Mehrfach-Teleskoprohrs sehr viel einfacher, ohne dass eine Beeinträchtigung der Klemmkraft in Kauf genommen werden müsste. Dies ist insbesondere bei der Verwendung des Mehrfach-Teleskoprohrs als Kamerastativbein von Vorteil, wenn das Stativ bei schnellen und häufigen Motivwechseln oft verstellt werden muss und auf eine hohe Klemmkraft trotzdem nicht verzichtet werden kann.

Im zweiten Fall, wenn also die Belastung in der Klemmlängsrichtung des Mehrfach-Teleskoprohrs eine Zugbelastung des Teleskoprohrs ist, wird eine Arretierung des Teleskoprohrs gegen Kräfte, die das Teleskoprohr auseinander zu ziehen bestrebt sind, erzielt. Dabei kann das Teleskoprohr jederzeit weiter zusammengeschoben werden. Dies kann beispielsweise dann wünschenswert sein, wenn ein schwerer Gegenstand, zum Beispiel eine Studioleuchte, an dem Teleskoprohr aufgehängt ist. Auch hier verstärkt sich die Klemmkraft mit zunehmender Belastung, hier mit zunehmender Zugbelastung.

In beiden Fällen kann das Teleskoprohr jederzeit ohne Betätigung einer irgendwie gearteten Einrichtung in einer Richtung verstellt werden, während eine Verstellung in der entgegengesetzten Richtung stets sicher durch eine lastabhängige Klemmung verhindert wird.

Weitere vorteilhafte Ausgestaltungen des erfindungsgemäßen Mehrfach-Teleskoprohrs finden sich in den abhängigen Patentansprüchen.

Wie oben bereits erwähnt, kann zumindest eines der Innenrohre in einem der Außenrohre angeordnet sein. Dies ermöglicht eine besonders raumsparende Ausgestaltung des Mehrfach-Teleskoprohrs.

Die Relativbewegung zwischen den Eingriffselementen bewirkt vorzugsweise eine Bewegung des Klemmeingriffselements in Richtung der Außenflächen der Innenrohre, bevorzugt in etwa senkrecht zur Teleskopbewegung.

Vorzugsweise weist die Klemmeinrichtung außerdem eine Freigabe-Einrichtung zum Lösen des Eingriffs zwischen dem Klemmeingriffselement und den Außenflächen der Innenrohre auf. Diese Freigabe-Einrichtung kann beispielsweise ein in Längsrichtung des Mehrfach-Teleskoprohrs bewegbarer Schieber sein, der besonders einfach zu betätigen ist; es sind jedoch auch andere Ausgestaltungen denkbar. Mittels der Freigabe-Einrichtung ist vorzugsweise das Klemmeingriffselement relativ zum Eingriffsbetätigungselement bewegbar, so dass der Eingriff zwischen den beiden Eingriffselementen und somit auch der Eingriff zwischen dem Klemmeingriffselement und den Innenrohren mittels der Freigabe-Einrichtung gelöst werden kann.

Vorzugsweise ist dabei die Freigabe-Einrichtung mittels eines elastischen Elements in einer der Freigabe entgegengesetzten Richtung vorgespannt. Die Freigabe-Einrichtung wird dann entgegen dieser Vorspannung betätigt, um die Klemmung zu lösen.

Das Eingriffsbetätigungselement wirkt vorzugsweise direkt mit dem Klemmeingriffselement zusammen und ist zu diesem Zweck komplementär zum Klemmeingriffselement ausgebildet. Beispielsweise kann das Eingriffsbetätigungselement als Keil ausgestaltet sein, dessen schräge Flächen mit schrägen Flächen des Klemmeingriffselements zusammen wirken, so dass die Relativbewegung der beiden Eingriffselemente den Eingriff bzw, die Klemmung des Klemmeingriffselements mit den Innenrohren herbeiführt.

Vorzugsweise besteht das Klemmeingriffselement aus mehreren Teilen, wobei insbesondere die Anzahl der Teile des Klemmeingriffselements gleich der Anzahl der vorhandenen Innenrohre sein kann. Die einzelnen Teile des Klemmeingriffselements werden dann mit der Außenfläche jeweils eines Innenrohrs in Eingriff gebracht. Jeder Teil des Klemmeingriffselements wirkt dabei vorzugsweise gleichzeitig mit dem Eingriffsbetätigungselement zusammen, d.h. das Zusammenwirken des Eingriffsbetätigungselements mit dem mehrteiligen Klemmeingriffselement bewirkt eine gleichzeitige Verklemmung aller Innenrohre.

Das Mehrfach-Teleskoprohr kann zum Beispiel zwei Innenrohre und zwei Außenrohre aufweisen, wobei es sich dann um ein Doppel-Teleskoprohr handelt.

Die Klemmeinrichtung kann ein Gehäuse aufweisen, in dem die Eingriffselemente untergebracht sind und das fest mit den Außenrohren verbunden ist.

Schließlich weist ein erfindungsgemäßes Kamerastativ zumindest ein erfindungsgemäßes Mehrfach-Teleskoprohr als Stativbein auf.

Die Teleskoprohre können eine verschiedene Querschnittsform haben, wie beispielsweise rund, oval oder polygonal.

### Kurze Beschreibung der Zeichnungen

Die Erfindung wird nachfolgend anhand einer in den Zeichnungen dargestellten, beispielhaften Ausführungsform genauer beschrieben, wobei
- Fig. 1: eine perspektivische Ansicht eines erfindungsgemäßen Doppel-Teleskoprohrs zeigt;
- Fig. 2a und 2b: eine Vorderansicht bzw. eine Längsschnittansicht entlang der Linie A-A in Fig. 2a dieses erfindungsgemäßen Doppel-Teleskoprohrs zeigt;
- Fig. 3: eine perspektivische Ansicht des erfindungsgemäßen Doppel-Teleskoprohrs zeigt, wobei eine Freigabe-Einrichtung nicht dargestellt ist; und
- Fig. 4a, 4b und 4c: eine Vorderansicht bzw. eine Längsschnittansicht entlang der Linie A-A in Fig. 4a bzw. eine Querschnittsansicht entlang der Linie B-B in Fig. 4a des erfindungsgemäßen Doppel-Teleskoprohrs zeigt, wobei die Freigabe-Einrichtung ebenfalls nicht dargestellt ist.

### Ausführliche Beschreibung einer vorteilhaften Ausführungsform

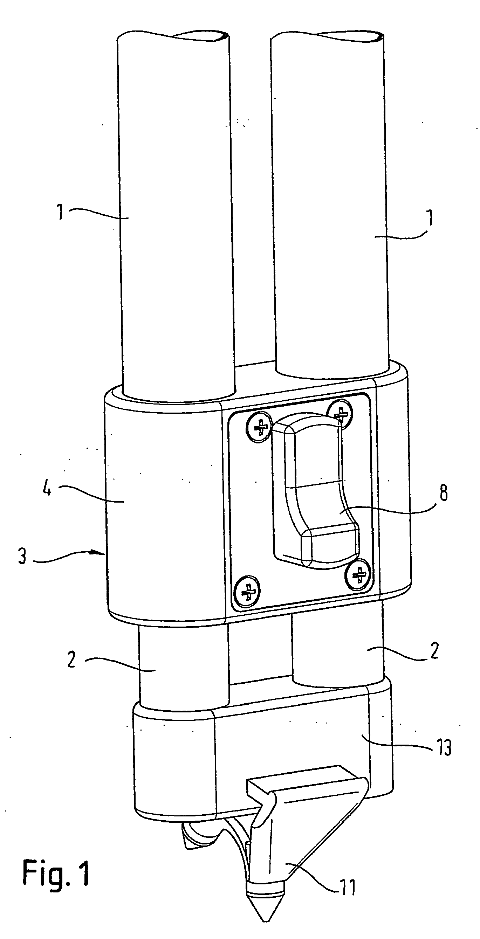

Eine vorteilhafte Ausführungsform eines erfindungsgemäßen Mehrfach-Teleskoprohrs ist in den Fig. 1 bis 4 dargestellt.

Das Doppel-Teleskoprohr gemäß der hier dargestellten Ausführungsform eignet sich insbesondere als Stativbein eines Kamerastativs, beispielsweise eines Einbeinstativs oder eines Dreibeinstativs. Es weist zwei Außenrohre 1 und zwei Innenrohre 2 auf. Die Innenrohre 2 sind in den Außenrohren 1 gleitend verschiebbar angeordnet, so dass die Länge des Stativbeins stufenlos verstellbar ist.

Als Material für die Innenrohre 2 und Außenrohre 1 wird vorzugsweise ein leichtes Material wie beispielsweise Kohlefaser oder Aluminium verwendet.

Zum Feststellen der Innenrohre 2 bezüglich der Außenrohre 1 und somit zur Einstellung des Stativbeins auf eine gewünschte Länge ist eine Klemmeinrichtung 3 vorgesehen. Das Gehäuse 4 dieser Klemmeinrichtung 3 ist mit den beiden Außenrohren 1 fest verbunden.

Die beiden Innenrohre 2 sind an ihren unteren Enden über eine Traverse 13 starr miteinander gekoppelt, an der ein Doppel-Spike 11 vorgesehen ist, mittels dessen das Stativbein auf den Boden aufgesetzt wird. Es handelt sich hier demnach um den untersten Auszug eines Stativbeins. Die Erfindung ist aber auch auf andere Auszüge eines solchen Stativbeins anwendbar.

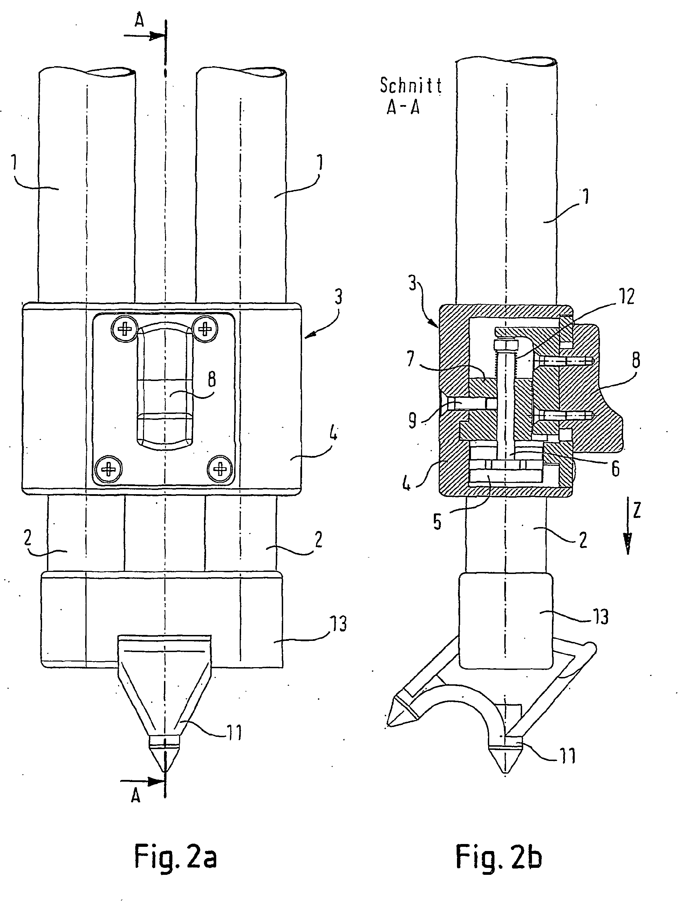

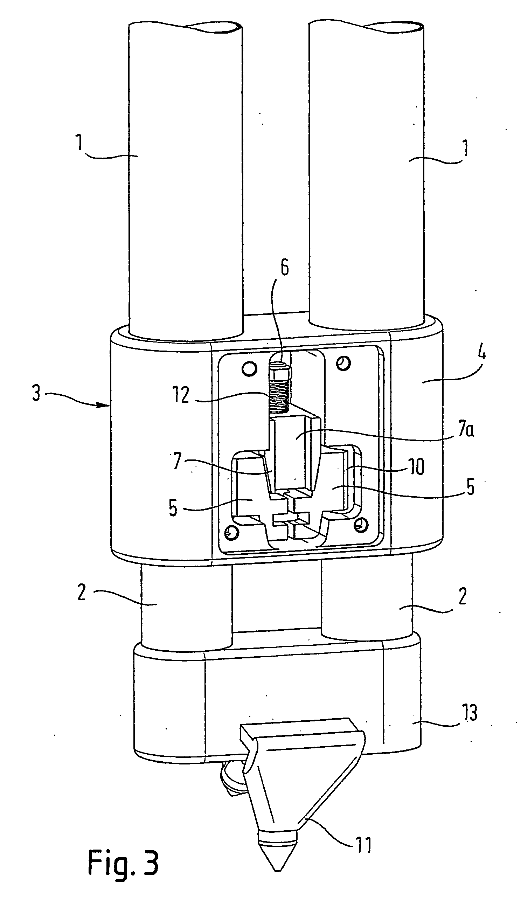

Der Aufbau der erfindungsgemäßen Klemmeinrichtung 3 wird nun anhand der Fig. 2a, 2b und 3 beschrieben. In Fig. 3 ist dabei ein Schieber 8, dessen Funktion noch genauer erläutert wird, nicht dargestellt, so dass die innere Struktur der Klemmeinrichtung 3 sichtbar ist.

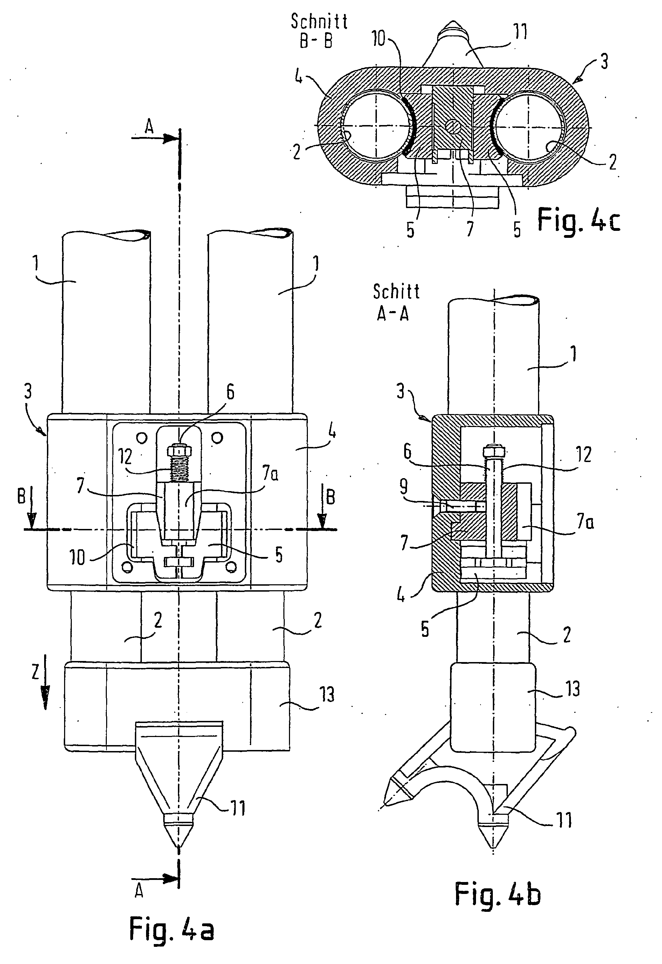

Ein Spreizkeil 7 (Eingriffsbetätigungselement) ist mittels einer Schraube 9 fest mit dem Gehäuse 4 der Klemmeinrichtung 3 verbunden. Durch den Spreizkeil 7 hindurch erstreckt sich eine Steuerstange 6, so dass sie bezüglich des Spreizkeils 7 und somit auch bezüglich des Gehäuses 4 in vertikaler Richtung , d.h. in der in Fig. 2b mit "Z" gekennzeichneten Richtung, bewegbar ist. Der Kopf der Steuerstange 6 ist mit zwei Klemmbacken 5 (zweiteiliges Klemmeingriffselement) im Eingriff, die auf beiden Seiten des Spreizkeils 7 angeordnet sind und schräge Flächen aufweisen, die mit schrägen Flächen des Spreizkeils 7 zusammen wirken. An ihren dem Spreizkeil 7 abgewandten Flächen sind die Klemmbacken 5 mit Reibbelägen 10 (siehe Fig. 4c) versehen, über die sie mit den Innenrohren 2 in Klemmeingriff bringbar sind. Der. Eingriff zwischen dem Kopf der Steuerstange 6 ist so, dass sich die Steuerstange 6 und die Klemmbacken 5 gemeinsam in Z-Richtung vor und zurück bewegen können, zugleich aber die Klemmbacken 5 sich senkrecht dazu voneinander weg und aufeinander zu bewegen können.

Wie insbesondere aus der Schnittansicht A-A in Fig. 2b hervorgeht, ist der Schieber 8 mit der Steuerstange 6 so verbunden, dass diese in Z-Richtung relativ zum Spreizkeil 7 abwärts bewegbar ist, wobei die Steuerstange 6 die beiden Klemmbacken 5 mitnimmt. Zwischen der Steuerstange 6 und dem Spreizkeil 7 befindet sich eine Rückholfeder 12, die den Schieber 8 und somit auch die Steuerstange 6 und die Klemmbacken 5 nach oben vorspannt und in der Ruhestellung eine Keilwirkung zwischen dem Spreizkeil 7 und den Klemmbacken 5 hervorruft, durch die die Klemmbacken in Klemmeingriff mit den Innenrohren 2 gedrückt werden.

Fig. 4a zeigt eine Vorderansicht der erfindungsgemäßen Klemmeinrichtung 3, wobei der Schieber 8 ebenfalls nicht dargestellt ist. In der Schnittansicht B-B der Fig. 4c sind die Reibbeläge 10 der Klemmbacken 5 und ihre Anordnung bezüglich der Innenrohre 2 besonders deutlich erkennbar. Aus der Schnittansicht A-A gemäß Fig. 4b wird deutlich, dass in dem Spreizkeil 7 eine Nut 7a vorgesehen ist, die zur Aufnahme und Führung des Schiebers 8 dient.

Die erfindungsgemäße Klemmeinrichtung 3 funktioniert wie folgt.

Das Stativbein kann stets ohne Betätigung des Schiebers 8 oder einer sonstigen Einrichtung auseinander gezogen werden, d.h. die Innenrohre 2 können einfach aus den Außenrohren 1 herausgezogen werden, da eine eventuelle Reibkraft zwischen den Innerohren 2 und den Klemmbacken 5 dabei den Spreizkeil 7 und die Klemmbacken 5 entgegen der Keilwirkung voneinander lösen wird. Sobald dann eine Last, beispielsweise das Gewicht einer Kamera, in Längsrichtung des Stativbeins wirkt und ein Ineinanderschieben der Innenrohre 2 und Außenrohre 1 herbeiführen möchte, wird der Spreizkeil 7 weiter zwischen die beiden Klemmbacken 5 gedrückt. Dabei bewirkt eine Anfangsreibkraft eine Bewegung der Klemmbacken 5 gegen den Spreizkeil 7. Durch das Zusammenwirken der schrägen Flächen des Spreizkeils 7 und der schrägen Flächen der Klemmbacken 5 werden die Klemmbacken 5 auswärts in Richtung der beiden Innenrohre 2 bewegt. Diese Anfangsreibkraft besteht dadurch, dass die Feder 12 die Reibbeläge 10 mit den Innenrohren 2 in Eingriff halten. Dadurch wird eine sichere Feststellung der Innenrohre bezüglich der Außenrohre 1 herbeigeführt.

Je größer die auf das Stativbein einwirkenden Belastung ist, desto weiter wird der Spreizkeil 7 zwischen die beiden Klemmbacken 5 bewegt, und desto größer ist die Klemmkraft, die die Klemmbacken 5 auf die Innenrohre 2 ausüben. Dennoch kann bei Entlastung das Stativbein jederzeit weiter ausgezogen werden, ohne den Schieber 8 oder eine sonstige Einrichtung betätigen zu müssen.

Um das Stativbein wieder zusammenschieben zu können, wird zum Lösen der Feststellung zwischen den Innenrohren 2 und den Außenrohren 1 nun der Schieber 8 in Z-Richtung geschoben. Dabei nimmt der Schieber 8 die Steuerstange 6 und die Klemmbacken 5 mit, so dass sich der Eingriff zwischen den Klemmbacken 5 und dem Spreizkeil 7 löst und die Klemmbacken 5 die Innenrohre 2 freigeben. Die Innenrohre 2 sind jetzt frei in den Außenrohren 1 verschiebbar.

Zum Feststellen des Stativbeins in einer anderen Arbeitsstellung wird der Schieber 8 losgelassen und bewegt sich durch die Vorspannung der Rückholfeder 12 nach oben. Durch Aufbringen einer Last, die das Stativbein zusammenschieben möchte - beispielsweise eines Kameragewichts - wird eine Verklemmung der Innenrohre 2 bezüglich der Außenrohre 1 in der neuen Arbeitsstellung herbeigeführt.

Die Erfindung ist natürlich auf dieses Ausführungsbeispiel nicht beschränkt.

Anstelle des hier gezeigten Doppel-Teleskoprohrs mit zwei parallelen Außenrohren und zwei darin angeordneten Innenrohren kann die Erfindung auch beispielsweise auf Dreifach-Teleskoprohre mit drei parallelen Außenrohren und drei dazu parallelen Innenrohren angewandt werden.

Das Mehrfach-Teleskoprohr kann dabei in jedem Fall beliebig viele Teleskopeinheiten oder Auszüge aufweisen, wobei dann für jede Teleskopeinheit oder jeden Auszug eine Klemmeinrichtung vorhanden ist.

Schließlich kann das erfindungsgemäße Mehrfach-Teleskoprohr - neben der Verwendung als Kamerastativbein - beispielsweise auch für verschiedene Arten von Rahmen, Gestelle für Tische und Stühle, Hebeböcke etc. verwendet werden, oder aber auch bei Hängekonstruktionen und Leuchten in Studios etc.

## Patentansprüche

1. Mehrfach-Teleskoprohr mit zumindest zwei parallel zueinander angeordneten Außenrohren (1) und zumindest zwei parallel zu den Außenrohren (1) angeordneten Innenrohren (2), die bezüglich der Außenrohre (1) in Längsrichtung (Z) verschiebbar sind, und mit einer Klemmeinrichtung (3), die ein Klemmeingriffselement (5) umfasst, das mit den Außenflächen der Innenrohre (2) in Eingriff bringbar ist,
**dadurch gekennzeichnet, dass** die Klemmeinrichtung (3) außerdem ein Eingriffsbetätigungselement (7) aufweist, das mit den Außenrohren (2) fest verbunden und relativ zum Klemmeingriffselement (5) beweglich ist, und dass bei Belastung des Mehrfach-Teleskoprohrs in einer Längsklemmrichtung die Klemmeinrichtung (3) das Verschieben der Innenrohre (2) bezüglich der Außenrohre (1) in dieser Klemmlängsrichtung verhindert, wogegen die Verschiebbarkeit in der entgegengesetzten Längsrichtung erhalten bleibt.

2. Mehrfach-Teleskoprohr gemäß Patentanspruch 1, bei welchem die Belastung in der Längsklemmrichtung einer Druckbelastung des Mehrfach-Teleskoprohrs entspricht.

3. Mehrfach-Teleskoprohr gemäß Patentanspruch 1, bei welchem die Belastung in der Klemmlängsrichtung einer Zugbelastung des Mehrfach-Teleskoprohrs entspricht.

4. Mehrfach-Teleskoprohr gemäß einem der vorangehenden Patentansprüche, bei welchem zumindest eines der Innenrohre (2) in einem der Außenrohre (1) angeordnet ist.

5. Mehrfach-Teleskoprohr nach Patentanspruch **1,** bei welchem das Eingriffsbetätigungselement (7) bei Belastung des Mehrfach-Teleskoprohrs in der Klemmlängsrichtung mit dem Klemmeingriffselement (5) in Eingriff gelangt.

6. Mehrfach-Teleskoprohr nach einem der vorangehenden Patentansprüche, bei welchem die Relativbewegung zwischen den Eingriffselementen (5, 7) eine Bewegung des Klemmeingriffselements (5) in Richtung der Außenflächen der Innenrohre (2) bewirkt.

7. Mehrfach-Teleskoprohr gemäß einem der vorangehenden Patentansprüche, bei welchem die Klemmeinrichtung (3) außerdem eine Freigabe-Einrichtung (8) zum Lösen des Eingriffs zwischen dem Klemmeingriffselement (5) und den Außenflächen der Innenrohre (2) aufweist.

8. Mehrfach-Teleskoprohr nach Patentanspruch **7,** bei welchem die Freigabe-Einrichtung (8) ein in Längsrichtung des Mehrfach-Teleskoprohrs bewegbarer Schieber (8) ist.

9. Mehrfach-Teleskoprohr nach Patentanspruch **7,** bei welchem das Klemmeingriffselement (5) mittels der Freigabe-Einrichtung (8) relativ zum Eingriffsbetätigungselement (7) bewegbar ist.

10. Mehrfach-Teleskoprohr nach einem der Patentansprüche **7** bis **9,** bei welchem die Freigabe-Einrichtung (8) mittels eines elastischen Elements (12) in einer der Freigabe entgegengesetzten Richtung vorgespannt ist.

11. Mehrfach-Teleskoprohr nach einem der vorangehenden Patentansprüche, bei welchem das Eingriffsbetätigungselement (7) komplementär zum Klemmeingriffselement (5) ausgebildet ist.

12. Mehrfach-Teleskoprohr nach Patentanspruch **11,** bei welchem die Eingriffselemente (5, 7) keilförmig im Eingriff miteinander stehen.

13. Mehrfach-Teleskoprohr nach einem der vorangehenden Patentansprüche, bei welchem das Klemmeingriffselement (5) aus zumindest zwei Teilen besteht, zwischen denen das Eingriffsbetätigungselement (7) sich befindet.

14. Mehrfach-Teleskoprohr nach Patentanspruch **13,** bei welchem die Anzahl der Teile des Klemmeingriffselements (5) gleich der Anzahl der Innenrohre (2) ist.

15. Mehrfach-Teleskoprohr nach einem der vorangehenden Patentansprüche, bei welchem zwei Innenrohre (2) und zwei Außenrohre (1) vorgesehen sind.

16. Mehrfach-Teleskoprohr nach einem der vorangehenden Patentansprüche, bei welchem die Klemmeinrichtung (3) ein Gehäuse (4) aufweist, in dem die Eingriffselemente (5, 7) untergebracht sind.

17. Mehrfach-Teleskoprohr nach Patentanspruch **16,** bei welchem das Gehäuse (4) fest mit den Außenrohren (1) verbunden ist.

18. Stativ mit zumindest einem Mehrfach-Teleskoprohr gemäß einem der vorangehenden Patentansprüche als Stativbein.

19. Stativ gemäß Patentanspruch **18,** wobei das Stativ ein Kamerastativ ist.

## Claims

1. Multiple telescopic tube having at least two outer tubes (1) arranged parallel to one another and at least two inner tubes (2) arranged parallel to the outer tubes (1) and which can be displaced in longitudinal direction (Z) with respect to the outer tubes (1), and having a clamping device (3), which comprises a clamping engagement element (5), which can be engaged with the outer surfaces of the inner tubes (2), **characterised in that** the clamping device (3) also has an engagement actuating element (7) which is firmly connected to the outer tubes (2) and can be moved relative to the clamping engagement element (5), and **in that** during loading of the multiple telescopic tube in a longitudinal clamping direction, the clamping device (3) prevents the displacement of the inner tubes (2) with respect to the outer tubes (1) in this longitudinal clamping direction, whereas the displaceability in the opposite longitudinal direction is retained.

2. Multiple telescopic tube according to patent claim 1, in which loading in the longitudinal clamping direction corresponds to compressive load of the multiple telescopic tube.

3. Multiple telescopic tube according to patent claim 1, in which loading in the longitudinal clamping direction corresponds to tensile load of the multiple telescopic tube.

4. Multiple telescopic tube according to one of the preceding patent claims, in which at least one of the inner tubes (2) is arranged in one of the outer tubes (1).

5. Multiple telescopic tube according to patent claim 1, in which the engagement actuating element (7) engages with the clamping engagement element (5) during loading of the multiple telescopic tube in the longitudinal clamping direction.

6. Multiple telescopic tube according to one of the preceding patent claims, in which the relative movement between the engagement elements (5, 7) effects a movement of the clamping engagement element (5) in the direction of the outer surfaces of the inner tubes (2).

7. Multiple telescopic tube according to one of the preceding patent claims, in which the clamping device (3) also has a release device (8) to release the engagement between the clamping engagement element (5) and the outer surfaces of the inner tubes (2).

8. Multiple telescopic tube according to patent claim 7, in which the release device (8) is a slide (8) which can be moved in longitudinal direction of the multiple telescopic tube.

9. Multiple telescopic tube according to patent claim 7, in which the clamping engagement element (5) can be moved relative to the engagement actuating element (7) by means of the release device (8).

10. Multiple telescopic tube according to one of patent claims 7 to 9, in which the release device (8) is pretensioned in a direction opposite to release by means of a resilient element (12).

11. Multiple telescopic tube according to one of the preceding patent claims, in which the engagement actuating element (7) is designed to be complementary to the clamping engagement element (5).

12. Multiple telescopic tube according to patent claim 11, in which the engagement elements (5, 7) are engaged with one another like a wedge.

13. Multiple telescopic tube according to one of the preceding patent claims, in which the clamping engagement element (5) consists of at least two parts, between which the engagement actuating element (7) is situated.

14. Multiple telescopic tube according to patent claim 13, in which the number of parts of the clamping engagement element (5) is equal to the number of inner tubes (2).

15. Multiple telescopic tube according to one of the preceding patent claims, in which two inner tubes (2) and two outer tubes (1) are provided.

16. Multiple telescopic tube according to one of the preceding patent claims, in which the clamping device (3) has a housing (4), in which the engagement elements (5, 7) are accommodated.

17. Multiple telescopic tube according to patent claim 16, in which the housing (4) is firmly connected to the outer tubes (1).

18. Tripod having at least one multiple telescopic tube according to one of the preceding patent claims as a tripod leg.

19. Tripod according to patent claim 18, wherein the tripod is a camera tripod.

## Revendications

1. Tube télescopique multiple avec au moins deux tubes extérieurs (1) parallèles et au moins deux tubes intérieurs (2) parallèles aux tubes extérieurs (1), qui sont insérables en direction longitudinale (Z) par rapport aux tubes extérieurs (1), et avec un dispositif de serrage (3), qui comprend un élément de serrage (5), qui peut interagir avec la surface extérieure du tube intérieur (2),
**caractérisé en ce que** le dispositif de serrage (3) présente en plus un élément de commande du serrage (7), qui est fixé aux tubes extérieurs (1) et est mobile par rapport à l'élément de serrage (5), et **en ce que** lors d'une charge du tube télescopique multiple en direction longitudinale de serrage, le dispositif de serrage (3) empêche le déplacement du tube intérieur (2) par rapport au tube extérieur (1) en cette direction longitudinale, ce par quoi la mobilité est maintenue en la direction longitudinale opposée.

2. Tube télescopique multiple selon la revendication 1, pour lequel la charge en la direction longitudinale de serrage correspond à une charge de pression du tube télescopique multiple.

3. Tube télescopique multiple selon la revendication 1, pour lequel la charge en la direction longitudinale de serrage correspond à une charge de traction du tube télescopique multiple.

4. Tube télescopique multiple selon l'une des revendications précédentes, pour lequel au moins un des tubes intérieurs (2) est agencé dans un des tubes extérieurs (1).

5. Tube télescopique multiple selon la revendication 1, pour lequel l'élément de commande de serrage (7) entre en interaction avec l'élément de serrage (5) lors d'une charge du tube télescopique multiple en direction longitudinale de serrage.

6. Tube télescopique multiple selon l'une des revendications précédentes, pour lequel le mouvement relatif entre les éléments de serrage (5, 7) effectue un mouvement de l'élément de serrage (5) en direction de la surface extérieure des tubes intérieurs (2).

7. Tube télescopique multiple selon l'une des revendications précédentes, pour lequel le dispositif de serrage (3) présente de plus, un dispositif de libération (8) pour libérer l'interaction entre l'élément de serrage (5) et la surface extérieure des tubes intérieurs (2).

8. Tube télescopique multiple selon la revendication 7, pour lequel le dispositif de libération (8) est un curseur (8) mobile en direction longitudinale du tube télescopique multiple.

9. Tube télescopique multiple selon la revendication 7, pour lequel l'élément de serrage (5) peut être déplacé par rapport à l'élément de commande de serrage (7) à l'aide du dispositif de libération (8).

10. Tube télescopique multiple selon l'une des revendications 7 à 9, pour lequel le dispositif de libération (8) est tendu à l'aide d'un élément élastique (12) en une direction opposée à la libération.

11. Tube télescopique multiple selon l'une des revendications précédentes, pour lequel l'élément de commande de serrage (7) est formé de manière complémentaire à l'élément de serrage (5).

12. Tube télescopique multiple selon la revendication 11, pour lequel les éléments de serrage (5, 7) se trouve en interaction l'une avec l'autre de manière cunéiforme.

13. Tube télescopique multiple selon l'une des revendications précédentes, pour lequel l'élément de serrage (5) consiste en au mois deux parties, entre lesquelles l'élément de commande de serrage (7) se trouve.

14. Tube télescopique multiple selon la revendication 13', pour lequel le nombre de parties de l'élément de serrage (5) est identique au nombre de tubes intérieurs (2).

15. Tube télescopique multiple selon l'une des revendications précédentes, pour lequel deux tubes intérieurs (2) et deux tubes extérieurs (2) sont prévus.

16. Tube télescopique multiple selon l'une des revendications précédentes, pour lequel le dispositif de serrage (3) présente un boîtier (4), dans lequel sont disposés les éléments de serrage (5, 7).

17. Tube télescopique multiple selon la revendication 16, pour lequel le boîtier (4) est fixé aux tubes extérieurs (1).

18. Pied avec au moins un tube télescopique multiple selon l'une des revendications précédentes, comme montant du pied.

19. Pied selon la revendication 18, où le pied est un pied de photographe.
